Europäisches Patentamt

European Patent Office

Office européen des brevets

(11) Veröffentlichungsnummer: **0 320 982 B1**

# EUROPÄISCHE PATENTSCHRIFT

(45) Veröffentlichungstag der Patentschrift: **09.06.93**

(21) Anmeldenummer: **88121137.9**

(22) Anmeldetag: **16.12.88**

(51) Int. Cl.⁵: **C04B 11/30**, C04B 28/14,
C09J 1/00, C09K 3/10,
//(C04B28/14,7:00,22:06,24:26)

(54) Verwendung von Gipswerkstoffen als Klebe- bzw. Verfugungsmasse.

(30) Priorität: **17.12.87 DE 3742913**

(43) Veröffentlichungstag der Anmeldung:
**21.06.89 Patentblatt 89/25**

(45) Bekanntmachung des Hinweises auf die
Patenterteilung:
**09.06.93 Patentblatt 93/23**

(84) Benannte Vertragsstaaten:
**AT BE CH DE ES LI NL SE**

(56) Entgegenhaltungen:
**DE-A- 2 222 486      DE-A- 3 015 168**
**DE-A- 3 339 535      FR-A- 2 211 001**
**US-A- 3 297 601      US-A- 4 654 085**

(73) Patentinhaber: **PCI Augsburg GmbH**
**Piccardstrasse 10**
**W-8900 Augsburg 1(DE)**

(72) Erfinder: **Psader, Josef**
**Johann-Sebastian-Bach-Strasse 12**
**W-8902 Neusäss(DE)**
Erfinder: **Hermann, Günther**
**Deuterstrasse 11c**
**W-8902 Neusäss(DE)**
Erfinder: **Ade, Amin**
**Saturnstrasse 6**
**W-8900 Augsburg 21(DE)**

(74) Vertreter: **Brauns, Hans-Adolf, Dr. rer. nat. et**
**al**
**Hoffmann, Eitle & Partner, Patentanwälte**
**Arabellastrasse 4**
**W-8000 München 81 (DE)**

Rank Xerox (UK) Business Services
(3. 10/3.6/3.3. 1)

**Beschreibung**

Die Erfindung betrifft die Verwendung einer Mischung aus mit $H_2O$ reaktionsfähigem Calciumsulfat und aluminatfreiem Zement, die gegebenenfalls auch Kunststoffpulver und Zuschlagsstoffe enthält, als Klebe- und Verfugungswerkstoff.

Es ist bekannt, daß man die Wasserbeständigkeit von Gipswerkstoffen durch den Zusatz hydrophobierend wirkender Kunststoffpulver, z.B. redispergierbaren Pulvern auf Basis von Vinylacetat/Vinylchlorid-Ethylen-Copolymeren, erzielen kann.

Aus der DE-OS 2 222 486 ist es weiterhin bekannt, daß man die Wasserfestigkeit von Anhydrit-Estrichen durch Zusatz von aluminatfreiem Zement verbessern kann. Die bekannten Massen werden für mehr oder weniger selbstverlaufende Estriche verwendet.

Zum Verlegen und Verfugen von Keramik- oder Natursteinfliesen wendet man traditionell zementgebundene Kleber oder Klebstoffe auf Dispersionsbasis an. Die Verfugung der verlegten Fliesen erfolgt dann mit zementgebundenen Fugenmassen.

Die bekannten Klebstoffe eignen sich jedoch nicht für gipshaltige Untergründe. Um sie hierzu zu verwenden, ist es erforderlich, Schutzgrundierungen vorzunehmen.

Da Fliesen üblicherweise in Räumen oder an solchen Stellen verlegt werden, bei denen eine erhebliche Feuchtigkeitsbelastung vorliegt oder vorliegen kann, würde die Verwendung von Anhydrit als Klebstoff und Fugenmasse nicht möglich sein, weil eine Calciumsulfat-Masse auf die Verwendung in trockenen Räumen beschränkt wäre.

Aufgabe der Erfindung ist es nun, einen einfachen Werkstoff als Klebe- und Verfugungswerkstoff zur Verfügung zu stellen. Diese Aufgabe wird durch eine Mischung gelöst, die aus 20 bis 80 Gew.% mit $H_2O$ reaktionsfähigem Calciumsulfat und 80 bis 20 Gew.% aluminatfreiem Zement besteht.

Durch die erfindungsgemäße Mischung wird die Bildung des "Zement-Bazillus" vermieden. Die Reaktion $3CaO \cdot Al_2O_3 - + 3CaSO_4 + 32H_2O \rightarrow 3CaO \cdot Al_2O_3 \cdot 3CaSO_4 \cdot 32H_2O$ (Ettringitbildung) führt bekanntlich zu Treiberscheinungen und würde den Werkstoff zerstören.

Wie aus der obigen Gleichung hervorgeht, ist dieses Ettringittreiben an das Vorhandensein von Tricalciumaluminat ($C_3A$) geknüpft.

Anorganische, hydraulisch abbindende Bindemittel wie Zement zeichnen sich durch ihre Wasserbeständigkeit aus. Gips als Bindemittel ist dagegen nicht wasserbeständig. Zement schrumpft beim Erhärten, während Calciumsulfat sich ausdehnt.

Durch die erfindungsgemäße Kombination von aluminatfreiem Zement mit mit $H_2O$ reaktionsfähigem Calciumsulfat gleichen sich die vorerwähnten Eigenschaften aus und man erhält ein hervorragendes Mittel, um Fliesen nicht nur an einen Untergrund zu verkleben, sondern die verklebten Fliesen auch zu verfugen.

Obwohl aus der vorerwähnten DE-OS 2 222 486 die Herstellung von Mörtelmassen auf Basis von Anhydrit und $C_3A$-freien Zementen bekannt war, wird durch diesen Stand der Technik der Gegenstand der vorliegenden Erfindung nicht nahegelegt; denn die bekannten Mörtelmassen dienen zur Herstellung von Estrich. Ein Estrich ist aber per Definition ein anderes Produkt als ein Fug- und Klebemörtel für Fliesen. Ein Estrich stellt üblicherweise eine mineralisch gebundene, einige Zentimeter dicke Mörtelschicht dar, deren Oberfläche hinsichtlich Widerstandsfähigkeit und Ebenheit besonderen Anforderungen genügen muß. Bei einem Klebemörtel zum Festanhaften von Fliesen an einem Untergrund liegt nur eine sehr dünne Klebeschicht vor, d.h., daß die Fliesen im Dünnbettverfahren aufgebracht werden. Mit einem Fugmörtel werden dann die vorhandenen Fugen obeflächenbündig geschlossen.

Außer mit $H_2O$ reaktionsfähigem Calciumsulfat und aluminatfreiem Zement können die Mischungen noch bis zu 10 Gew.%, bezogen auf die vorerwähnte Mischung, an einem redispergierbaren Kunststoffpulver enthalten. Solche redispergierbaren Kunststoffpulver sind insbesondere Vinylacetatcopolymere, z.B. Vinylacetat-Ethylen-Copolymerisate oder Vinylacetat/Versaticsäureester-Copolymerisate oder auch Copolymere aus Vinylchlorid und Ethylen. Auch ein Terpolymer aus Vinylacetat/Versatat/Vinyllaurat ist geeignet.

Weiterhin können die Mischungen auch noch 0,1 bis 5 Gew.% Calciumhydroxid, bezogen auf den Gehalt an Calciumsulfat und aluminatfreiem Zement, enthalten. Übliche anorganische Füllstoffe wie Quarzmehl, Sand, Kreide (Calciumcarbonat) usw., deren Menge, bezogen auf die fertige Mischung, über 85 Gew.% nicht hinausgehen sollte, können ebenfalls in den Mischungen vorliegen.

Die Mischungen ergeben eine gute Klebefestigkeit der Fliese auf dem Untergrund und nach der Aushärtung hohe Werte bezüglich der Biegezugfestigkeit und der Druckfestigkeit.

Nachfolgend werden Beispiele für für die vorliegende Erfindung geeignete Mischungen gezeigt:

1. Zement ($C_3$A-frei):     20 g
   Calciumsulfat ( $\alpha$-Halbhydrat):     80 g
   Wasser:     28 g

2. Zement ($C_3$A-frei):     30 g
   Calciumsulfat ( $\alpha$-Halbhydrat):     70 g
   Wasser:     28 g

3. Zement ($C_3$A-frei):     40 g
   Calciumsulfat ( $\alpha$-Halbhydrat):     60 g
   Wasser:     28 g

4. Zement ($C_3$A-frei):     20 g
   Calciumsulfat ( $\alpha$-Halbhydrat):     79,5 g
   Redispersionspulver:     0,5 g
   Wasser:     28 g

5. Zement ($C_3$A-frei):     20 g
   Calciumsulfat ( $\alpha$-Halbhydrat):     75 g
   Redispersionspulver:     5 g
   Wasser:     28 g

6. Zement ($C_3$A-frei):     20 g
   Calciumsulfat ( $\alpha$-Halbhydrat):     75 g
   Calciumhydroxid:     4,75 g
   Wasser:     29 g

7. Zement (C$_3$A-frei):      20 g

    Calciumsulfat (Anhydrit):     80 g

    Wasser:      23 g

8. Zement (C$_3$A-frei):      15 g

    Calciumsulfat ($\alpha$-Halbhydrat):     29 g

    Quarzsand 0-200 µm:      17 g

    Calciumcarbonat 0-100 µm     35 g

    Redispersionspulver:      4 g

    Wasser:      20 g

9. Zement (C$_3$A-frei):      9 g

    Calciumsulfat ($\alpha$-Halbhydrat):     35 g

    Quarzsand 0-200 µm:      35 g

    Calciumcarbonat 0-100 µm     17 g

    Redispersionspulver:      4 g

    Wasser:      20 g

10. Zement (C$_3$A-frei):      18 g

    Calciumsulfat ($\alpha$-Halbhydrat):     26 g

    Quarzsand 0-200 µm      35 g

    Calciumcarbonat 0-100 µm     17 g

    Redispersionspulver:      4 g

    Wasser:      20 g

Vergleichsprodukte:

11. Zement (C$_3$A-frei):      9 g

    Calciumsulfat (Anhydrit):     35 g

    Quarzsand 0-100 µm      35 g

12. Calciumsulfat ($\alpha$-Halbhydrat

    ohne Zement):      100 g

    Wasser:      28 g

13. Portlandzement PZ 45F:     20 g

    Calciumsulfat ($\alpha$-Halbhydrat):     80 g

    Wasser:     28 g

Man erhält folgende Biegezug- und Druckfestigkeiten in Anlehnung an DIN 1164:

| | Biegezug-festigkeit in $N/mm^2$ | Druckfestig-keit in $N/mm^2$ | Haftzug-festigkeit in $N/mm^2$ |
|---|---|---|---|
| zu 1. | | | |
| – nach 28 d T * | 9,5 | 57 | – |
| – nach 7 d T + 21 d N ** | 8,0 | 33 | – |
| – nach 14 d T + 14 d N | 8,0 | 37 | – |
| zu 2. | | | |
| – nach 28 d T | 9,5 | 53 | – |
| – nach 7 d T + 21 d N | 8,5 | 39 | – |
| – nach 14 d T + 14 d N | 8,0 | 40 | – |
| zu 3. | | | |
| – nach 28 d T | 11,0 | 50 | – |
| – nach 7 d T + 21 d N | 8,5 | 40 | – |
| – nach 14 d T + 14 d N | 8,0 | 41 | – |
| zu 4. | | | |
| – nach 28 d T | 9,0 | 53 | – |
| – nach 7 d T + 21 d N | 8,5 | 35 | – |
| – nach 14 d T + 14 d N | 8,5 | 36 | – |

\*    Lagerung bei Raumklima 23°C/50% relative Luftfeuchte

\*\*   Lagerung bei Raumklima (7 Tage) mit anschließender Lagerung unter Wasser (20°C)

zu 5.

| | | | |
|---|---|---|---|
| – nach 28 d T | 6,0 | 30 | – |
| – nach 7 d T + 21 d N | 6,0 | 25 | – |
| – nach 14 d T + 14 d N | 6,0 | 24 | – |

zu 6.

| | | | |
|---|---|---|---|
| – nach 28 d T | 11,0 | 48 | – |
| – nach 7 d T + 21 d N | 8,0 | 35 | – |
| – nach 14 d T + 14 d N | 8,0 | 36 | – |

zu 7.

| | | | |
|---|---|---|---|
| – nach 28 d T | 10,0 | 55 | – |
| – nach 7 d T + 21 d N | 9,0 | 43 | – |
| – nach 14 d T + 14 d N | 8,5 | 40 | – |

zu 8.

| | | | |
|---|---|---|---|
| – nach 28 d T | 5,0 | 20 | 1,5 |
| – nach 7 d T + 21 d N | 1,0 | 6 | 0,3 |
| – nach 14 d T + 14 d N | 1,5 | 7 | 0,3 |

zu 9.

| | | | |
|---|---|---|---|
| – nach 28 d T | 5,0 | 21 | 1,6 |
| – nach 7 d T + 21 d N | 3,0 | 11 | 0,8 |
| – nach 14 d T + 14 d N | 3,0 | 10 | 0,9 |

zu 10.

| | | | |
|---|---|---|---|
| – nach 28 d T | 5,5 | 28 | 2,4 |
| – nach 7 d T + 21 d N | 4,0 | 18 | 1,2 |
| – nach 14 d T + 21 d N | 4,5 | 19 | 1,4 |

In den Beispielen 1 bis 7 wird das Verhalten der entsprechenden Mischungen im Grundsatz gezeigt, die Beispiele 8 bis 10 zeigen das Verhalten der Mischung beim Verkleben von keramischen Platten, geprüft in Anlehnung an DIN 18156 T2.

Die Massen ergeben Verlege- bzw. Dünnbettmörtel zum Verlegen keramischer Beläge und Platten. Die Mörtel sind ausreichend naßfest, so daß die Massen auch in Feuchträumen eingesetzt werden können.

zu 11.

In Abmischung mit diversen Eisenoxidpigmenten ist die Masse zum Füllen der Fugen in keramischen Belägen geeignet. Aufgrund der leicht expansiven Abbindung des Mörtels ist, obwohl der Zuschlag sehr fein ist, die Fugenbreite nicht limitiert. Nach der Aushärtung ist die Fugenoberfläche geschlossen und in ihrer Struktur sehr fein. Die Fuge ist ausreichend naßfest und kann auch in Feuchträumen eingesetzt werden.

```
zu 12.
  - nach 28 d T              6,0         33              -
  - nach 7 d T + 21 d N      3,5          9              -
  - nach 14 d T + 14 d N     2,8          5              -
```

Nach der Wasserlagerung zeigen die Prismen starke Risse, die Mase ist aufgeweicht.

```
zu 13.
  - nach 28 d T              10          45              -
  - nach 7 d T + 21 d N       -           -              -
  - nach 14 d T + 14 d N      -           -              -
```

Die Prismen sind nach der Wasserlagerung durch Treiberscheinungen zerstört. Eine Festigkeitsprüfung ist nicht mehr sinnvoll.

## Patentansprüche

1. Verwendung einer Mischung aus 20 bis 80 Gew.% mit $H_2O$-reaktionsfähigem Calciumsulfat und 80 bis 20 Gew.% aluminatfreiem Zement als Fug- und Klebemittel für Fliesen.

2. Verwendung nach Anspruch 1, dadurch **gekennzeichnet,** daß das mit $H_2O$ reaktionsfähige Calciumsulfat $\alpha$-Halbhydrat und/oder Anhydrit ist.

3. Verwendung nach einem der Ansprüche 1 oder 2, dadurch **gekennzeichnet,** daß zusätzlich bis zu 10 Gew.% eines redispergierbaren Kunststoffpulvers aus der Gruppe Vinylchlorid/Ethylen-Copolymere, Vinylacetat/Versaticsäureester-Copolymere, Vinylacetat/Ethylen-Copolymere und Vinylacetat/Versatat/Vinyllaurat-Terpolymer in der Masse vorliegt.

4. Verwendung gemäß einem der Ansprüche 1 bis 3, dadurch **gekennzeichnet,** daß die Mischung 0,1 bis 5 Gew.%, bezogen auf die Mischung aus mit $H_2O$ reaktionsfähigem Calciumsulfat und aluminatfreiem Zement, Calciumhydroxid enthält.

5. Verwendung gemäß einem der vorhergehenden Ansprüche, dadurch **gekennzeichnet,** daß die Mischung bis zu 85 Gew.% anorganischer Füllstoffe, bezogen auf die fertige Mischung, enthält..

## Claims

1. Use of a mixture of 20 to 80 wt.% of calcium sulphate which is reactive with $H_2O$ and 80 to 20 wt.% of aluminate-free cement as jointing agent and adhesive for tiles.

2. Use according to claim 1, characterised in that the calcium sulphate which is reactive with $H_2O$ is $\alpha$-hemihydrate and/or anhydrite.

3. Use according to one of claims 1 or 2, characterised in that additionally up to 10 wt.% of a redispersible plastic powder from the group vinyl chloride/ethylene copolymers, vinyl acetate/versatate copolymers, vinyl acetate/ethylene copolymers and vinyl acetate/versatate/vinyl laurate terpolymer is present in the composition.

**4.** Use according to one of claims 1 to 3, characterised in that the mixture contains 0.1 to 5 wt.% of calcium hydroxide, based on the mixture of calcium sulphate which is reactive with $H_2O$ and aluminate-free cement.

**5.** Use according to one of the preceding claims, characterised in that the mixture contains up to 85 wt.% of inorganic fillers, based on the finished mixture.

**Revendications**

**1.** Utilisation d'un mélange composé de 20 à 80 % en poids de sulfate de calcium réagissant à l'eau et de 80 à 20 % en poids de ciment sans aluminate, comme masse de jointoiement et de colle pour des carrelages.

**2.** Utilisation selon la revendication 1, caractérisée en ce que le sulfate de calcium régissant à l'eau est un α-semi-hydrate et/ou un anhydrite.

**3.** Utilisation selon l'une des revendications 1 ou 2, caractérisé en ce qu'est en plus présent dans la masse, jusqu'à 10 % en poids d'une poudre synthétique pouvant être redispersée et appartenant au groupe copolymères de chlorure de vinyl/éthylène, copolymères acétate de vinyl/ester d'acide versatique, copolymères acétate de vinyl/éthylène et terpolymère acétate de vinyl/versatate/laurate de vinyl.

**4.** Utilisation selon l'une des revendications 1 à 3, caractérisé en ce que le mélange contient de 0,1 à 5 % en poids d'hydroxyde de calcium, par rapport au mélange composé de sulfate de calcium réagissant à l'eau et de ciment sans aluminate.

**5.** Utilisation selon l'une des revendications précédentes, caractérisé en ce que le mélange contient jusqu'à 85 % en poids de matières de charge inorganiques, par rapport au mélange terminé.